# EUROPÄISCHE PATENTSCHRIFT

(11) **EP 1 471 015 B1**
(45) Veröffentlichungstag und Bekanntmachung des Hinweises auf die Patenterteilung: **27.06.2007**
(21) Anmeldenummer: 04101631.2
(22) Anmeldetag: 20.04.2004
(51) Int. Cl.: B65G 1/04, B65G 1/02

(54) **Flexibel nutzbares Regallager**
Shelf storage for flexible use
Magazin à rayonnage à usage flexible

(30) Priorität: 22.04.2003 DE 20306390 U
(43) Veröffentlichungstag der Anmeldung: 27.10.2004
(73) Patentinhaber: WITRON Logistik + Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 0 077 885
- EP-A- 0 437 894
- WO-A-97/21616
- DE-U1- 8 703 863
- DE-U1- 20 306 390
- US-A- 4 570 806

## Beschreibung

Die Erfindung betrifft ein Regallager zum Lagern von Artikeln. Derartige Regallager werden vielfältig zur Lagerung verschiedenster Artikel, beispielsweise für ein Versand- oder Logistikzentrum verwendet. Die Artikel können in dem Regallager dabei auf verschiedenen Ladehilfen wie etwa Paletten, Tablaren, Behältern, Körben usw. gelagert werden.

Bei der Lagerung unterscheidet man zwischen häufig nachgefragten Artikeln, sogenannten Schnellläufer-Artikeln und seltener nachgefragten Artikeln, sogenannten Langsamläufer-Artikeln. Die in hohen Stückzahlen umgesetzten Schnellläufer-Artikel werden in Regallagern aufgrund der größeren Volumenausnutzung als kompakte Ladestapel auf Paletten gelagert. Für die seltener umgesetzten Langsamläufer-Artikel beansprucht ein Paletten-Ladestapel jedoch zuviel Raum, um bei einer gegebenen Regalfrontfläche genügend Artikel unterbringen zu können. Es ist daher vorteilhaft, die Langsamläufer-Artikel auf Tablaren (trays) einzeln oder in kleinen Stückzahlen zu lagern. So können bei gegebener Regalfrontfläche eine größere Anzahl verschiedener Langsamläufer-Artikel untergebracht werden.

Es ist daher bekannt, in einem Regallager separierte Bereiche zur Lagerung von Schnelläufer-Artikeln auf Paletten und Bereiche zur Lagerung von Langsamläufer-Artikeln auf Tablaren vorzusehen. Damit verbunden ist jedoch der Nachteil, daß Raumreserven sowohl im Lagerbereich für Schnelläufer-Artikel als auch im Lagerbereich für Langsamläufer-Artikel vorgehalten werden müssen. Dies ist insbesondere nachteilig, wenn der Anteil der Schnelläufer-Artikel und der Langsamläufer-Artikel (beispielsweise saisonal) schwankt. Der insgesamt im Regallager vorhandene Lagerraum wird nicht optimal genutzt, weil im Paletten-Lagerbereich und/oder im Tablar-Lagerbereich aufgrund der Schwankungen jeweils nicht genutzter Lagerraum vorgehalten werden muß.

Aus der EP 0437894 A1 ist ein Regallager mit vertikalen Trägern, die in Richtung entlang einer Regalgasse durch mehrere, übereinander angeordnete horizontale Längsträger verbunden sind und so eine Vielzahl von Regaleinheiten bilden, bekannt, in welchen Regaleinheiten schwenkbare Tablar-Auflagemittel zur Aufnahme von Tablaren und Ladungsträger-Auflagemittel zur Aufnahme von Ladungsträgern vorgesehen sind. In ihrer ausgeschwenkten Position dienen die Tablar-Auflagemittel zur Aufnahme von Tablaren in den Regaleinheiten, während in der eingeschränkten Position Ladungsträger (Paletten) gelagert werden können.

Es ist daher eine Aufgabe der vorliegenden Erfindung, die beschriebenen Nachteile zu überwinden und ein Regallager vorzuschlagen, das eine raumoptimierte Lagerung sowohl von Schnelläufer-Artikeln als auch von Langsamläufer-Artikeln ermöglicht.

Gelöst wird die Aufgabe durch ein Regallager mit vertikalen Trägern, die in Richtung entlang einer Regalgasse durch mehrere, übereinander angeordnete horizontale Längsträger 12 verbunden sind und so eine Vielzahl von Regaleinheiten bilden, in denen Tablar-Auflagemittel zur Aufnahme von Tablaren und Ladungsträger-Auflagemittel zur Aufnahme von Ladungsträgern derart vorgesehen sind, daß in der Regaleinheit wahlweise Tablare und/oder Ladungsträger lagerbar sind.

Durch das erfindungsgemäße Regallager wird die starre Zuordnung von Ladehilfsmitteln zu den Lagerbereichen unnötig, so daß auf verschiedenen Ladehilfsmitteln gelagerte Artikel variabel und raumoptimiert gelagert werden können. Ein Regaleinheit kann je nach Bedarf entweder zur Lagerung von (Langsamläufer-)Artikeln auf Tablaren oder zur Lagerung von (Schnellläufer)Artikeln auf Ladungsträgern wie etwa Paletten verwendet werden.

Die Tablar-Auflagemittel können vorzugsweise als Auflagewinkel ausgebildet sein, die an den vertikalen Trägern befestigt sind. Die Auflagewinkel erlauben eine sichere Lagerung der Tablare, ragen dabei jedoch nur so weit in den Lagerraum der Lagereinheit hinein, so daß ein auf einem Ladungsträger gelagerter Ladestapel in der Regaleinheit noch Platz hat, so daß eine variable Nutzung der Regaleinheit sichergestellt ist.

Die Ladungsträger-Auflagemittel werden vorzugsweise durch ein Paar von Längsträgern gebildet, die in Einschubrichtung so weit voneinander beabstandet sind, daß ein Ladungsträger in Längsrichtung auf dem Paar von Längsträgern auflegbar ist.

Je nach Abmessungen der Tablare können diese in Querrichtung auf den Auflagewinkeln liegen, wobei vorzugsweise zwei Tablare hintereinander lagerbar sind, so daß eine optimale Raumausnutzung ermöglicht wird.

Bei den Ladungsträgern kann es sich beispielsweise um Euro-Paletten handeln. Vorzugsweise ist dann die Breite (in Regalfrontrichtung) und die Tiefe einer Regaleinheit auf die Grundrißmaße der Palette abgestimmt. Die Höhe einer Regaleinheit kann beispielsweise 2 m bis 2,50 m betragen.

Die Erfindung wir im Folgenden anhand eines Ausführungsbeispiels unter Bezugnahme auf die beiliegenden Zeichnungen beschrieben, in denen
- Fig. 1: eine Seitenansicht der Regalfront eines Ausführungsbeispiels des erfindungsgemäßen Regallagers von einer Regalgasse aus gesehen zeigt, und
- Fig. 2: eine Horizontalschnittansicht entlang der Ebene II-II des Regallagers von Fig. 1 zeigt.

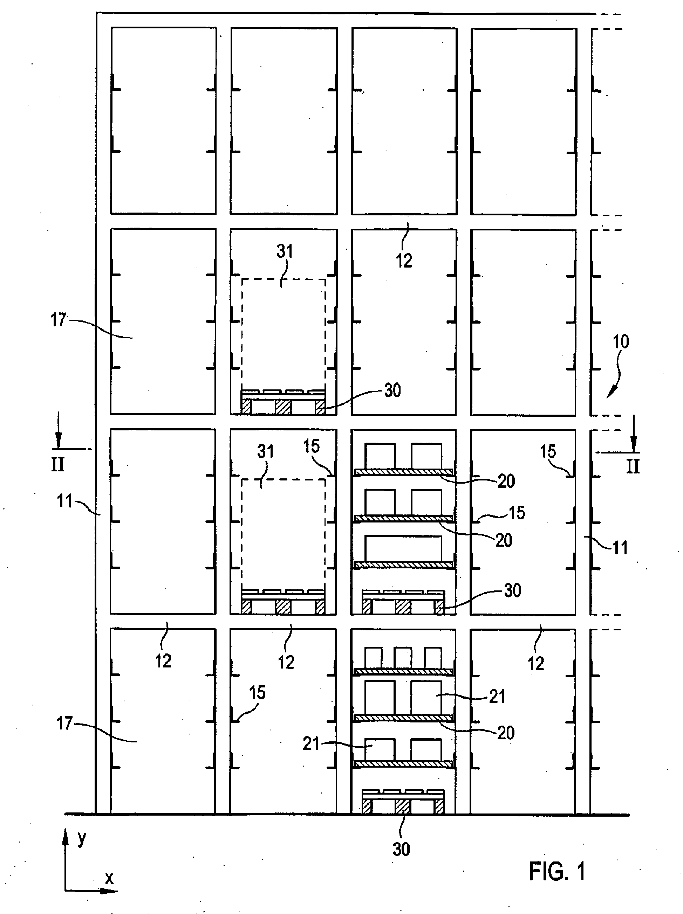

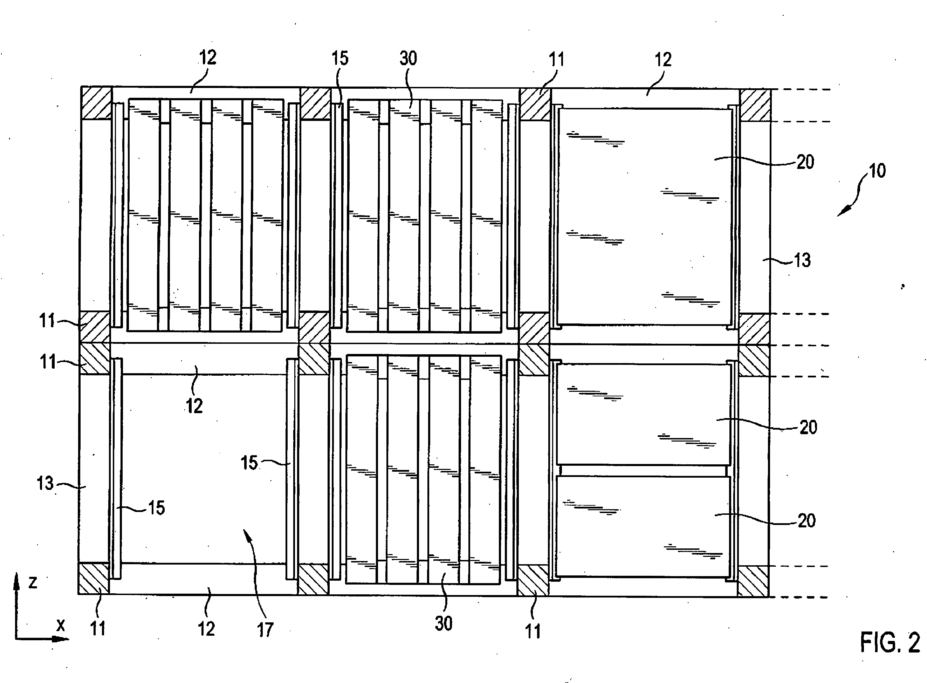

Die Fig. 1 und 2 zeigen ein Ausführungsbeispiel eines erfindungsgemäßen Regallagers. Fig. 1 zeigt die Regalfront, die sich nach rechts hin weiter fortgesetzt vorstellen läßt. Selbstverständlich ist das erfindungsgemäße Regallager nicht auf eine bestimmte Anzahl von Regaleinheiten oder bestimmte Regalabmessungen beschränkt. Die mit Ziff. 11 bezeichneten vertikalen Träger (Steher) sind in regelmäßigen vertikalen Abständen von beispielsweise 2 m bis 2,50 m durch horizontale Längsträger 12 verbunden. Die Bezeichnung Längsträger bezieht sich auf die Längsrichtung der Regalgasse, die in Fig. 1 und 2 als x-Richtung bezeichnet ist. Zwischen den vertikalen Trägern 11 und den horizontalen Längsträgern 12 werden jeweils Regaleinheiten 17 gebildet, die erfindungsgemäß flexibel entweder zur Lagerung von auf Ladungsträgern 30 gelagerten Artikeln 31 oder zur Lagerung von auf Tablaren 20 gelagerten Artikeln 21 genutzt werden können.

Unter Ladungsträgern sind dabei insbesondere Paletten, beispielsweise Euro-Paletten zu verstehen, auf denen ein Ladestapel 31 gebildet wird, der aus unterschiedlichen Artikeln bestehen kann. Unter einem Tablar oder Tray 20 ist ein tablettförmiges Ladehilfsmittel zu verstehen, auf dem ein oder mehrere Artikel in Kartons oder Packeinheiten (Collies) liegend gelagert werden. Vorzugsweise liegen auf einem Tablar 20 nur ein oder mehrere Artikel 21 desselben Typs. Die Tablare 20 ermöglichen einen schnellen, wahlweisen Zugriff auf einzelne Artikel 21 durch geeignete Regalfahrzeuge.

Fig. 2 zeigt in Horizontalschnittansicht eine Regalreihe eines Ausführungsbeispiels des erfindungsgemäßen Regallagers, die gebildet wird durch vier sich in Regalgassen-Längsrichtung (x-Richtung) erstreckende Reihen von vertikalen Trägern 11, die jeweils durch Längsträger 12 miteinander verbunden sind. In Tiefenrichtung (z-Richtung) des Lagerregals sind die vertikalen Träger 11 durch horizontale Querverbände 13 miteinander verbunden. Die Längsträger 12 sind so voneinander beabstandet, daß in eine Regaleinheit 17 ein Ladungsträger 30 in Längsrichtung einschiebbar ist und auf dem Paar die Regaleinheit 17 in z-Richtung begrenzenden Längsträgern 12 aufliegt, wie in der Fig. 2 gut zu erkennen ist. Die Höhe der Regaleinheiten 17, d. h. der vertikale Abstand der Längsträger 12 voneinander ist dabei so gewählt, daß auf den Ladungsträgern 30 geladene Ladestapel 31 unterbringbar sind.

An den Vertikalträgern 11 sind in einer vorgegebenen Höhenrasterung als Tablar-Auflagemittel Auflagewinkel 15 angebracht. Die Höhenrasterung kann je nach Größe der gelagerten Artikel unterschiedlich sein. In der obersten in Fig. 1 dargestellten Regalreihe ist z. B. eine größere vertikale Beabstandung der Auflagewinkel 15 gewählt. Auf den Auflagewinkeln 15 sind die Tablare 20 lagerbar, je nach deren Abmessungen in Längsrichtung oder auch besonders vorteilhaft in Querrichtung, beispielsweise zweifach tief hintereinander wie in Fig. 2 rechts unten im Bild dargestellt ist. Eine möglichst gute Volumenausnutzung kann dadurch sichergestellt werden. In den Fig. 1 und 2 erkennt man, daß die Auflagewinkel 15 nur so weit in x-Richtung in die jeweilige Regaleinheit 17 hineinragen, daß die Lagerung eines auf einem Ladungsträger 30 aufliegenden Ladestapels 31 in Längsrichtung in der Lagereinheit jederzeit möglich ist. Dadurch ist eine flexible Nutzung aller Regaleinheiten entweder zur Lagerung von auf Tablaren liegenden Artikeln oder zur Lagerung von auf Ladungsträgern / Paletten liegenden Artikeln möglich. Wie in Fig. 1 dargestellt ist, ist es außerdem möglich, leere Paletten auf den Längsträgern 12 in einer Regaleinheit 17 zusammen mit Tablaren zu lagern.

Das erfindungsgemäße Regallager ermöglicht so eine flexible und raumoptimierte Lagerung von Artikeln auf verschiedenen Ladehilfmitteln, beispielsweise Schnellläufer-Artikeln auf Ladungsträgern / Paletten und Langsamläufer-Artikeln auf Tablaren. Die Tablar-Auflagemittel können dabei entfernbar an den Vertikalträgern angebracht sein, so daß eine flexible Anpassung der Höhenrasterung an den jeweiligen Bedarf möglich ist.

### Bezugszeichenliste

- 10: Lagerregal
- 11: vertikaler Träger / Steher
- 12: Längsträger
- 13: Querträger
- 15: Auflagewinkel
- 17: Regaleinheit
- 20: Tablar
- 21: Artikel
- 30: Palette
- 31: Ladestapel

## Patentansprüche

1. Regallager mit vertikalen Trägern (11), die in Richtung entlang einer Regalgasse durch mehrere, übereinander angeordnete horizontale Längsträger (12) verbunden sind und so eine Vielzahl von Regaleinheiten (17) bilden, in welchen Regaleinheiten (17) Tablar-Auflagemittel (15) zur Aufnahme von Tablaren (20) und Ladungsträger-Auflagemittel (12) zur Aufnahme von Ladungsträgern (30) derart vorgesehen sind, daß in einer Regaleinheit (17) wahlweise Tablare (20) und/oder Ladungsträger (30) lagerbar sind, **dadurch gekennzeichnet, dass** die Tablar-Auflagemittel (15) in Längsrichtung zur Regalfront nur so weit in den Lagerraum einer Regaleinheit (17) hineinreichen, dass die Lichte Werte zwischen zwei jeweils gegenüberliegenden Tablar-Auflagemitteln (15) wenigstens der Breite eines Ladungsträgers (30) entspricht, sodass in der Regaleinheit (17) ein beladener Ladungsträger (30) abstellbar ist.

2. Regallager nach Anspruch 1, wobei die Tablar-Auflagemittel (15) als an den vertikalen Trägern (11) befestigte Auflagewinkel ausgebildet sind.

3. Regallager nach Anspruch 1 oder 2, wobei die Ladungsträger-Auflagemittel (12) durch zwei Längsträger gebildet werden, die in Tiefenrichtung des Regallagers so beabstandet sind, daß ein Ladungsträger (30) auflegbar ist.

4. Regallager nach einem der Ansprüche 1 bis 3, wobei die Tablare (20) quer zur Einschubrichtung lagerbar sind.

5. Regallager nach Anspruch 4, wobei zwei Tablare (20) hintereinander lagerbar sind.

6. Regallager nach einem der Ansprüche 1 bis 5, wobei auf den Tablaren (20) langsam laufende Artikel lagerbar sind.

7. Regallager nach einem der Ansprüche 1 bis 6, wobei auf den Ladungsträgern (30) schnell laufende Artikel lagerbar sind.

8. Regallager nach einem der Ansprüche 1 bis 7, wobei die Ladungsträger (30) Paletten, beispielsweise Euro-Paletten sind.

9. Regallager nach Anspruch 8, wobei die Tiefe und Breite einer Regaleinheit (17) auf die Grundrißmaße einer in Längsrichtung in der Regaleinheit (17) gelagerten Palette (30) abgestimmt sind.

10. Regallager nach einem der Ansprüche 1 bis 9, wobei die Höhe einer Regaleinheit (17) zwischen 2 Meter und 2,50 Meter beträgt.

11. Regallager nach einem der Ansprüche 1 bis 10, wobei die Tablar-Auflagemittel (15) abnehmbar mit einer veränderbaren Höhenrasterung an den vertikalen Trägern (11) angebracht sind.

## Claims

1. Storage racking with vertical support members (11) which are interconnected by means of several horizontally disposed longitudinal members (12) and thus form a plurality of racking units (17), in which racking units (17) shelf support means (15) for supporting shelves (20) and handling carrier support means (12) for accommodating handling carriers (30) are provided so that shelves (20) and/or handling carriers (30) can be selectively stowed in a racking unit (17), **characterised in that** shelf-support means (15) in the racking unit (17) extend just far enough into in the storage space of a racking unit (17) in the longitudinal direction with respect to the racking front that the clearance values between two respective oppositely lying shelf-support means (15) corresponds to at least the width of a handling carrier (30), thereby enabling a loaded handling carrier (30) to be deposited in the racking unit (17).

2. Storage racking as claimed in claim 1, in which the shelf-support means (15) is provided in the form of a supporting bracket attached to the vertical support members (11).

3. Storage racking as claimed in claim 1 or 2, in which the handling carrier support means (12) is formed by two longitudinal members which are spaced apart in the depth direction of the storage racking so that a handling carrier (30) can be stowed.

4. Storage racking as claimed in one of claims 1 to 3, in which the shelves (20) can be fitted transversely to the stowing direction.

5. Storage racking as claimed in claim 4, in which two shelves (20) can be fitted one behind the other.

6. Storage racking as claimed in one of claims 1 to 5, in which slowly moving articles can be stowed on the shelves (20).

7. Storage racking as claimed in one of claims 1 to 6, in which rapidly moving articles can be stowed on the handling carriers (30).

8. Storage racking as claimed in one of claims 1 to 7, in which the handling carriers (30) are pallets, for example Euro-pallets.

9. Storage racking as claimed in claim 8, in which the depth and width of a racking unit (17) is adapted to the base contour of a pallet (30) stored in the racking unit (17) in the longitudinal direction.

10. Storage racking as claimed in one of claims 1 to 9, in which the height of a racking unit (17) is between 2 metres and 2.50 metres.

11. Storage racking as claimed in one of claims 1 to 10, in which the shelf-support means (15) can be removably fitted on the vertical support members (11) by means of a variable height ratchet system.

## Revendications

1. Entrepôt à rayonnages, avec des supports verticaux (11), qui sont reliés entre eux, dans la direction le long d'un couloir, par plusieurs supports longitudinaux (12) horizontaux, disposés les uns au-dessus des autres, et forment ainsi une pluralité d'unités de stockage (17), dans lesquelles unités de stockage (17) sont prévus des supports de tablettes (15) destinés à recevoir des tablettes (20) et des supports de porte-charge (12) destinés à recevoir des porte-charge (30), de telle sorte que des tablettes (15) et/ou des porte-charge (30) peuvent être montés au choix dans une unité de stockage (17), **caractérisé en ce que** les supports de tablette (15) s'engagent dans l'enceinte de stockage d'une unité de stockage (17), dans le sens longitudinal par rapport à la face frontale des rayonnages, uniquement sur une distance telle que la largeur intérieure entre deux supports de tablette (15), respectivement face à face, correspond au moins à la largeur d'un porte-charge (30), de telle sorte qu'un porte-charge (30) chargé peut être entreposé dans une unité de stockage (17).

2. Entrepôt à rayonnages selon la revendication 1, dans lequel les supports de tablette (15) sont réalisés sous forme de cornières de support fixées contre les supports verticaux (11).

3. Entrepôt à rayonnages selon la revendication 1 ou 2, dans lequel les supports de porte-charge (12) sont formés par deux supports longitudinaux, qui sont écartés l'un de l'autre dans le sens de la profondeur de l'entrepôt à rayonnages, de telle sorte qu'un porte-charge (30) peut y être posé.

4. Entrepôt à rayonnages selon l'une quelconque des revendications 1 à 3, dans lequel les tablettes (20) peuvent être posées perpendiculairement à la direction d'introduction.

5. Entrepôt à rayonnages selon la revendication 4, dans lequel deux tablettes (20) peuvent être posées l'une derrière l'autre.

6. Entrepôt à rayonnages selon l'une quelconque des revendications 1 à 5, dans lequel des articles à faible demande peuvent être stockés sur les tablettes (20).

7. Entrepôt à rayonnages selon l'une quelconque des revendications 1 à 6, dans lequel dans lequel des articles à forte demande peuvent être stockés sur les porte-charge (30).

8. Entrepôt à rayonnages selon l'une quelconque des revendications 1 à 7, dans lequel les porte-charge (30) sont des palettes, telles que des euro-palettes.

9. Entrepôt à rayonnages selon la revendication 8, dans lequel la profondeur et la largeur d'une unité de stockage (17) sont déterminées en fonction des dimensions des contours d'une palette (30) posée dans le sens longitudinal dans l'unité de stockage (17).

10. Entrepôt à rayonnages selon l'une quelconque des revendications 1 à 9, dans lequel la hauteur d'une unité de stockage (17) se situe entre 2 mètres et 2,50 mètres.

11. Entrepôt à rayonnages selon l'une quelconque des revendications 1 à 10, dans lequel les supports de tablette (15) sont montés de manière amovible avec des niveaux de hauteur variables contre les supports verticaux (11).
